# EUROPÄISCHE PATENTSCHRIFT

(11) **EP 2 231 383 B1**
(45) Veröffentlichungstag und Bekanntmachung des Hinweises auf die Patenterteilung: **27.04.2011**
(21) Anmeldenummer: 09703149.6
(22) Anmeldetag: 20.01.2009
(51) Int. Cl.: B29C 49/70, B29C 49/00

(54) **VORRICHTUNG ZUM HERSTELLEN BLASGEFORMTER BEHÄLTERERZEUGNISSE AUS KUNSTSTOFFMATERIAL**
DEVICE FOR PRODUCING BLOWMOLDED CONTAINER PRODUCTS FROM PLASTIC MATERIAL
DISPOSITIF POUR LA PRODUCTION DE CONTENANTS EN MATIÈRE PLASTIQUE MOULÉS PAR SOUFFLAGE

(30) Priorität: 25.01.2008 DE 102008006073
(43) Veröffentlichungstag der Anmeldung: 29.09.2010
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2009/000307
(87) Internationale Veröffentlichungsnummer: WO 2009/092554

(56) Entgegenhaltungen:
- DE-A1- 2 165 816
- DATABASE WPI Week 199220 Thomson Scientific, London, GB; AN 1992-163217 XP002528327 -& JP 04 101826 A (TOKYO GLASS SEIKI K) 3. April 1992 (1992-04-03)

## Beschreibung

Die Erfindung betrifft eine Vorrichtung zum Herstellen blasgeformter Behältererzeugnisse aus Kunststoffmaterial mittels entlang einer Herstellungslinie verlaufender Einzel-Formteile, die paarweise aufeinander zu und voneinander weg bewegbar sind, um eine Herstellform zu schließen bzw. zu öffnen, in der die Behältererzeugnisse geformt werden, die nach dem Entformvorgang in Form einer entlang der Herstellungslinie bewegten Behälterkette austreten, wobei eine Entformungseinrichutng, die außerhalb der Herstellungsform an der ausgetretenen Behälterkette angreift, zur Unterstützung des Entformungsvorganges vorgesehen ist.

Im Stand der Technik (DE 199 26 329 A1) sind Verfahren und Vorrichtungen zum Herstellen von Behältererzeugnissen aus Kunststoff bekannt. Zum Herstellen des jeweiligen Erzeugnisses wird ein Schlauch plastifizierten Kunststoffmaterials in eine Formeinrichtung hinein extrudiert, das eine Ende des Schlauches durch Verschweißen verschlossen und durch Erzeugen eines am Schlauch wirkenden pneumatischen Druckgradienten dieser aufgeweitet und zur Bildung des Behälters an die formgebenden Wände der Formeinrichtung, bestehend aus zwei gegenüberliegenden Einzel-Formteilen, angelegt. Bei der Durchführung des auf diesem technischen Gebiet bekannten bottelpack^{®}-Verfahrens wird dann über einen entsprechenden Fülldorn der jeweilige Kunststoffbehälter steril innerhalb der Formeinrichtung befüllt und nach Abziehen des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Einzel-Formteile in Form von Formgebungsbacken beispielsweise mittels hydraulischer oder servoelektrischer Antriebsmittel für den Erhalt einer Schließstellung aufeinander zu und in eine ihrer Öffnungsstellungen voneinander weg gegenläufig bewegbar sind. Um hier zu sehr hohen Ausstoßraten an Behältererzeugnissen zu gelangen, ist in der DE 103 23 335 A1 eine Mehrstationenanordnung beschrieben, bei der, durch das Aufteilen verschiedener Formgebungsschritte an verschiedene, auf einem fiktiven Kreisbogen hintereinander angeordnete Stationen eine Art Karussell-Anordnung geschaffen ist, die sehr hohe Taktfrequenzen für das auszustoßende Kunststoffgut ermöglicht, das entlang einer Herstellungslinie als Behälterkette austritt.

Als Kunststoffmaterial für die Behältererzeugnisse wird üblicherweise Polyethylen eingesetzt, das sich in derartigen Herstellvorrichtungen sehr gut verarbeiten lässt und dementsprechend bevorzugt wird. Der Einsatz von Polyethylen als Behälterwerkstoff verursacht jedoch Probleme, wenn es sich bei dem in das jeweilige Behältererzeugnis einzufüllenden Füllgut um Fluide handelt, die bei 121 ° C autoklaviert werden sollen. Insbesondere kann dies der Fall sein, wenn es sich beispielsweise um ein hochsensibles Pharmazeutikum handelt. In solchen Fällen wird im Stand der Technik darauf geachtet, dass man beispielsweise die Füllöffnung des Behälterschlauches zumindest von ihrer Bildung bis zum Befüllen des zugehörigen Behälters unter einem Sterilraum durch eine sterile Barriere abdeckt, wobei sich gute Ergebnisse hierbei realisieren lassen, wenn man, wie in der DE 10 2004 004 755 A1 aufgezeigt, mittels der genannten Barriere ein steriles Medium unter Einsatz einer Medienfördereinrichtung in Richtung der Behälterfüllöffnung verbringt, um so die Keimfreiheit zu verbessern. Eine andere oder zusätzliche Maßnahme zur Erhöhung der Sterilität ist, einfach höhere Verarbeitungstemperaturen beispielsweise bei der Schlauchherstellung für das Behältererzeugnis oder während des Einfüllens des Füllgutes vorzusehen. Ein solches Vorgehen steht jedoch im Widerspruch zu der Temperaturempfindlichkeit des als Kunststoffmaterial vorgesehenen Polyethylens.

Dank der im Vergleich zu Polyethylen weit höheren Verarbeitungstemperatur von Polypropylenmaterial und der dadurch möglichen höheren Autoklavierungstemperatur von 121° C lassen sich die an die Sterilität zu stellenden Anforderungen einfach und kostengünstig gewährleisten. Der Benutzung von Polypropylen stehen jedoch beträchtliche Verarbeitungsschwierigkeiten entgegen.

Wegen der weit höheren Austrittstemperaturen, die sich bei einem Propylenmaterial ergeben, und wegen der hieraus resultierenden steiferen Oberflächenbeschaffenheit im Vergleich mit Behältnissen aus Polyethylen, ergeben sich Schwierigkeiten beim Ablösen von den betreffenden Formwänden der Herstellform. Um diesen Schwierigkeiten zu begegnen, ist in dem Dokument DE 21 65 816 C3 für eine Vorrichtung zum Herstellen von ausgeformten, aneinander hängenden Behältnissen aus Polypropylenmaterial eine Entformungseinrichtung vorgeschlagen, bei der außerhalb der Herstellform an der ausgetretenen Behälterkette eine Fördereinrichtung angreift, die der Behälterkette eine Abziehgeschwindigkeit erteilt, die geringer ist als die Bewegungsgeschwindigkeit der Herstellform. Durch eine so erzeugte elastische Kontraktion der Behältnisse soll deren Ablösen von den Formwänden begünstigt werden. Insbesondere bei den anzustrebenden hohen Taktfrequenzen ist hierdurch die betriebssichere Entformung nicht gewährleistet.

Durch DATABASE WPI Week 199220 Thomson Scientific, London, GB; AN 1992-13217 XPO02528327 -&; JP 04 101826 A (TOKYO GLASS SEIKI K) 3. April 1992 (1992-04-03) und DE 21 65 816 A1 ist jeweils eine gattungsgemäße Vorrichtung zum Herstellen blasgeformter Behältererzeugnisse aus Kunststoffmaterial mittels entlang einer Herstellungslinie verlaufender Einzel-Formteile bekannt, die paarweise aufeinander zu- und voneinander wegbewegbar sind, um eine Herstellform zu schließen bzw. zu öffnen, in der die Behältererzeugnisse geformt werden, die nach dem Entformvorgang in Form einer entlang der Herstellungslinie bewegten Behälterkette austreten, wobei eine Entformungseinrichtung, die außerhalb der Herstellform an der ausgetretenen Behälterkette angreift, zur Unterstützung des Entformvorganges vorgesehen ist. Was die reibungslose Entformbarkeit des Behältererzeugnisses von der jeweiligen Formwand anbelangt, lassen diese bekannten Lösungen gleichfalls noch Wünsche offen.

Im Hinblick auf diese Problematik stellt sich die Erfindung die Aufgabe, eine Vorrichtung zur Verfügung zu stellen, die eine einfache, wirtschaftliche und sichere Herstellung der Behältererzeugnisse aus Polypropylenmaterial ermöglicht.

Erfindungsgemäß ist diese Aufgabe durch eine Vorrichtung gelöst, die die Merkmale des Patentanspruches 1 in seiner Gesamtheit aufweist.

Entsprechend dem kennzeichnenden Teil des Anspruches 1 weist erfindungsgemäß die Entformungseinrichtung einen Kraftantrieb auf, durch den die Behälterkette aus der Herstellungslinie in hin- und hergehender Bewegung auslenkbar ist. Für die Behälterkette ergibt sich daher im Austrittsbereich eine Rüttel- oder Schwingbewegung, wodurch das Ablösen von den Formwänden auch bei den für wirtschaftlichen Betrieb zu fordernden hohen Taktfrequenzen sichergestellt ist.

Vorzugsweise ist die Anordnung hierbei so getroffen, dass die Behälterkette durch den Kraftantrieb der Entformungseinrichtung zumindest im wesentlichen in der Richtung der Schließ- und Öffnungsbewegungen der Einzel-formteile auslenkbar ist. Die Behälterkette wird dadurch in eine quer zur Förderrichtung verlaufende Schwingbewegung versetzt.

Diesbezüglich kann die Anordnung vorzugsweise so getroffen sein, dass die Entformungseinrichtung eine mit dem Kraftantrieb getrieblich gekuppelte Mitnehmeranordnung mit Anlagenflächen aufweist, an denen die sich entlang der Herstellungslinie bewegende Behälterkette geführt ist und über die Auslenkkräfte auf die Behälterkette übertragbar sind.

Diese Mitnehmeranordnung kann einen Durchgangskanal aufweisen, dessen Wandteile eine Einfassung für die sich bewegende Behälterkette sowie die Anlageflächen zur Übertragung der Auslenkkräfte auf die Behälterkette bilden.

Vorzugsweise ist die Anordnung hierbei so getroffen, dass am Durchgangskanal bewegbare Wandteile vorhanden sind, die in eine der geschlossenen Einfassung der Behälterkette entsprechende Schließstellung und eine Offenstellung einstellbar sind, bei der die Mitnehmeranordnung mit der Behälterkette in und außer Eingriff bringbar ist. Die Vorrichtung kann auf diese Weise besonders einfach betriebsbereit gemacht werden, indem beim Anfahren der Fertigung die Mitnehmeranordnung mit offenen Wandteilen des Durchgangskanales an die Behälterkette herangebracht und sodann der Durchgangskanal zur Bildung einer Einfassung für die Behälterkette geschlossen wird.

Die Mitnehmeranordnung kann einen mit dem als Kraftantrieb dienenden Motor getrieblich verbundenen Tragrahmen aufweisen, der feststehende Wandteile des Durchgangskanales bildet und an dem die das Öffnen und Schließen der Einfassung ermöglichenden bewegbaren Wandteile des Durchganges zwischen Offenstellung und Schließstellung schwenkbar gelagert sind.

Üblicherweise wird bei der Herstellung kleinvolumiger Behälter, beispielsweise von Ampullen, so vorgegangen, dass mehrere nebeneinanderliegende Behälter gleichzeitig geformt sind, so dass eine breitflächige Behälterkette gebildet wird, in der eine Mehrzahl von einzelnen, Seite an Seite nebeneinanderliegenden Behältern zu einer Behälterkettenbahn zusammengefasst sind. Hierbei kann die Anordnung so getroffen sein, dass die Länge des Tragrahmens gleich oder größer ist als die Breite der Behälterkettenbahn und dass die beweglichen Wandteile an den seitlich der Behälterkettenbahn gelegenen Endbereichen des Tragrahmens angelenkt sind.

Weiterhin kann die Anordnung vorzugsweise so getroffen sein, dass die Entformungseinrichtung an einem Vorrichtungsgestell zwischen einer von der Herstellungslinie entfernt gelegenen Ruheposition und einer den Entformvorgang an der Behälterkette oder der Behälterkettenbahn unterstützenden Arbeitsposition lageeinstellbar angebracht ist. Dadurch ist der Austrittsbereich der Herstellform für Wartungs- oder Einstellmaßnahmen frei zugänglich, wenn die Entformungseinrichtung in der Ruheposition ist, während die Einrichtung dank der lageeinstellbaren Anordnung auf einfache Weise betriebsbereit gemacht werden kann. Für diese Lageeinstellung kann der Geräteträger der Entformungseinrichtung an dem Führungsbahnen für die Mitnehmeranordnung sowie der als Kraftantrieb dienende Motor gelagert sind, am Vorrichtungsgestell um eine Achse schwenkbar gelagert sein, die zur Richtung der Herstellungslinie senkrecht und zur Führungsebene der Führungsbahnen parallel verläuft.

Für die Schwenkbewegungen zwischen Ruheposition und Arbeitsposition der Entformungseinrichtung ist vorzugsweise ein Schwenkantrieb in Form eines Linearantriebes vorgesehen, der jeweils gelenkig mit dem Geräteträger in einem Abstand von dessen Schwenklager sowie mit einer Gelenkstelle verbunden ist, die am Vorrichtungsgestell in einem Abstand vom Schwenklager des Geräteträgers gelegen ist.

Nachstehend ist die Erfindung anhand eines in der Zeichnung dargestellten Ausführungsbeispieles im Einzelnen erläutert. Es zeigen:
- Fig. 1: eine stark vereinfacht gezeichnete Gesamtdarstellung eines Ausfüh- rungsbeispieles der erfindungsgemäßen Vorrichtung, wobei der Be- triebszustand mit in der Arbeitsposition befindlicher Entformungs- einrichtung gezeigt ist;
- Fig. 2: eine Darstellung lediglich eines Teilabschnittes der Herstellungsli- nie des Ausführungsbeispieles, wobei bewegbare Einzel-Formteile im Schnitt dargestellt sind, die in eine die Herstellform schließende Position bewegbar sind und wobei ein Behältererzeugnis in der Art einer Ampulle innerhalb der Herstellform dargestellt ist;
- Fig. 3: eine Draufsicht lediglich auf die Entformungseinrichtung des Aus- führungsbeispieles, wobei eine aus der Herstellform ausgetretene Behälterkette in Form einer breiten Behälterkettenbahn im Quer- schnitt dargestellt ist und wobei ein Durchgangskanal für die Behäl- terkettenbahn mit geschlossenen Wandteilen, die mit gestrichelten Linien angedeutet sind, eine geschlossene Einfassung bildet und mit durchgezogenen Linien bewegliche Wandteile in ihrer Offenstel- lung dargestellt sind, und
- Fig. 4: eine Seitenansicht der Entformungseinrichtung von Fig. 3, wobei diese in der Arbeitsposition, jedoch mit in der Offenstellung befind- lichen bewegbaren Wandteilen des Durchgangskanals dargestellt ist.

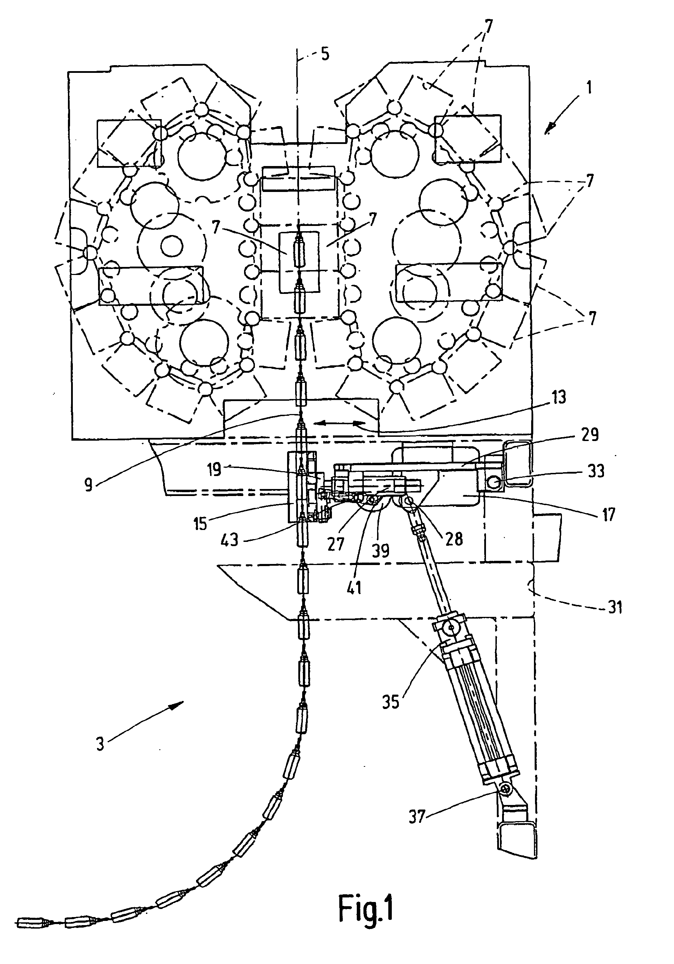

In Fig. 1 sind ein in der Figur oben liegender Herstellabschnitt als Ganzes mit 1 und eine sich nach unten daran anschließende Entformungseinrichtung als Ganzes mit 3 bezeichnet. Bei dem Herstellabschnitt 1 handelt es sich um eine Einrichtung zum Durchführen eines Blasformverfahrens entsprechend dem bekannten bottelpack^{®}-System, und zwar in einer Ausführungsform, bei der entlang einer Herstellungslinie 5 verschiedene Formgebungsschritte an verschiedenen Stationen durchgeführt werden. In einer Art Karussell-Anordnung werden hierbei Einzel-Formteile 7, von denen in Fig. 1 lediglich einige beziffert sind, auf einer fiktiven Kreisbogenbahn paarweise aufeinander zu bewegt, um eine geschlossene Herstellform zu bilden, und zum Öffnen der Form wieder auseinanderbewegt. Da nach dem bottelpack^{®}-Verfahren arbeitende Einrichtungen an sich bekannt sind, erübrigt sich eine nähere Erläuterung der Einzelheiten des Herstellabschnittes 1 von Fig. 1.

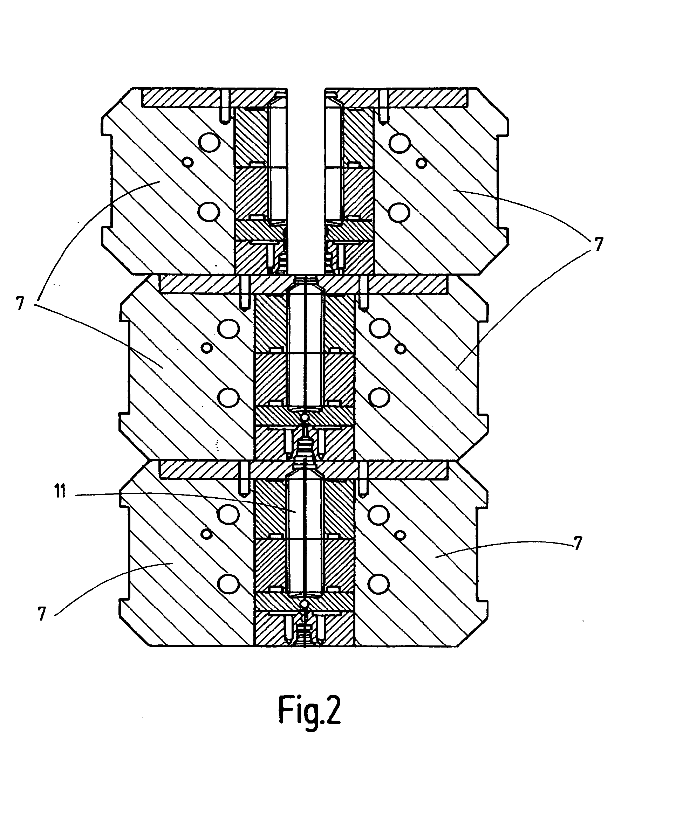

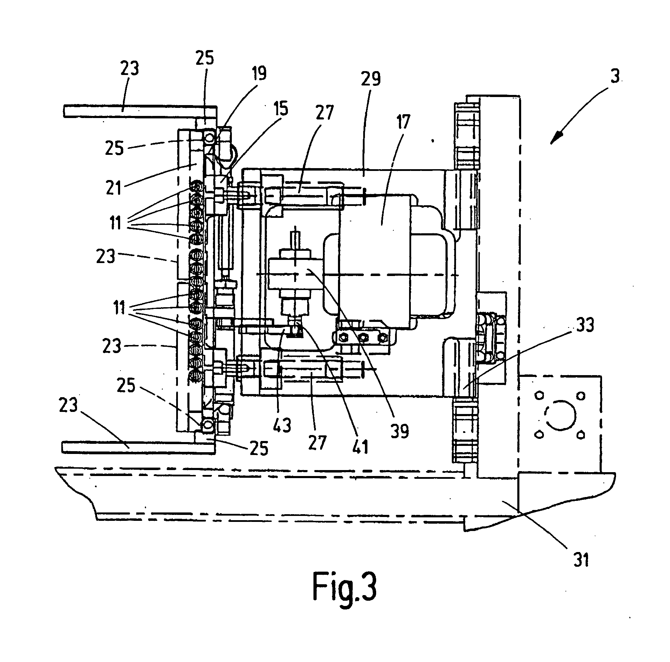

Wie aus dieser Figur ersichtlich, tritt die gebildete Behälterkette 9 entlang der Herstellungslinie 5 aus dem Herstellabschnitt 1 aus und gelangt zur Entformungseinrichtung 3. Wie aus Fig. 3 zu ersehen ist, handelt es sich bei der Behälterkette 9 um eine breitflächige Behälterkettenbahn, bei der eine Mehrzahl von Einzelbehältern 11 ampullenartiger Gestalt (Fig. 2), von denen in Fig. 3 lediglich einige beziffert sind, in der Behälterkette 9 Seite an Seite nebeneinander liegen. Um das Ablösen der Behälter 11 von den Wänden der sich am Austrittsbereich voneinander weg bewegenden Einzel-Formteile 7 zu unterstützen, vermittelt die Entformungseinrichtung 3 der Behälterkette 9 eine Auslenkbewegung, wie in Fig. 1 mit Doppelpfeil 13 angedeutet. Zu diesem Zweck weist die Entformungseinrichtung 3 eine Mitnehmeranordnung 15 auf, die in getrieblicher Verbindung mit einem elektrischen Antriebsmotor 17 die Auslenkbewegung der Behälterkette 9 erzeugt, um die Behälter 11 von den Formwandteilen sicher abzulösen.

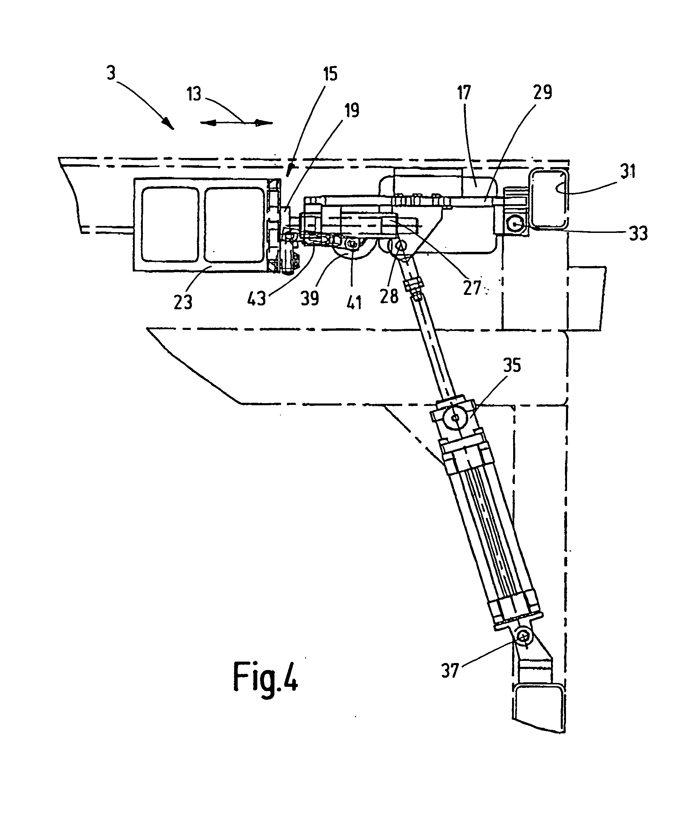

Die Einzelheiten der Entformungseinrichtung 3 und der Mitnehmeranordnung 15 sind aus Figuren 3 und 4 deutlicher zu ersehen. Diese Mitnehmeranordnung 15 bildet mit einem Tragrahmen 19 feste Wandteile eines Durchgangskanales 21 (Fig. 3) für die Behälterkette 9 mit den Behältern 11. Am Tragrahmen 19 schwenkbar gelagerte bewegliche Wandteile 23 sind in eine Offenstellung einstellbar, die in Fig. 3 mit ausgezogenen Linien dargestellt ist. In dieser Stellung ist die Behälterkette 9 für die Inbetriebnahme der Vorrichtung bequem in den offenen Durchgangskanal 21 einzulegen. Die beweglichen Wandteile 23 weisen abgewinkelte Rahmenschenkel 25 auf, die die Anlenkstelle an den Enden des Tragrahmens 19 bilden. Die Länge dieser Rahmenschenkel 25 ist an die Dickenabmessung der Behälter 11 der Behälterkette 9 so angepasst, dass bei in die Schließstellung geklappten Wandteilen 23, wie in Fig. 3 mit gestrichelter Linie dargestellt, eine passende Einfassung der Behälterkette 9 im Durchgangskanal 21 gebildet wird.

Der Tragrahmen 19 der Mitnehmeranordnung 15 ist für die entsprechend dem Doppelpfeil 13 von Fig. 1 und 4 verlaufenden Auslenkbewegungen an Führungsbahnen 27 geführt, die, wie auch der Motor 17, an einem Geräteträger 29 gelagert sind. Dieser ist wiederum an einem Vorrichtungsgestell 31 der Entformungseinrichtung 3 um eine Schwenkachse 33 schwenkbar gelagert. In einem Abstand von dieser Schwenklagerung ist bei 28 am Geräteträger 29 ein Linearantrieb 35 in Form eines hydraulischen oder pneumatischen Arbeitszylinders angelenkt, der wiederum an einer Anlenkstelle 37 am Vorrichtungsgestell 31 in einem Abstand vom Schwenklager 33 abgestützt ist.

Dank der schwenkbaren Lagerung des Geräteträgers 29 der Entformungseinrichtung 3 am Vorrichtungsgestell 31 kann die Entformungseinrichtung für Einstell- und Wartungsmaßnahmen sowie als Vorbereitung zur Inbetriebnahme aus der in Figuren 1 und 4 dargestellten Arbeitsposition durch Zurückziehen des Kraftantriebes 35 in eine Ruheposition abgeklappt werden, in der sich die Mitnehmeranordnung 15 außerhalb des Austrittsbereiches der Behälterkette 9 befindet. Für die Inbetriebnahme der Vorrichtung wird der Geräteträger 19 durch Ausfahren des Kraftantriebes 35 in die in Figuren 1 und 4 gezeigte Arbeitsposition gebracht. Ausgehend von dem Betriebszustand von Fig. 4 können die in der Offenstellung befindlichen Wandteile 23 in die Schließstellung geschwenkt werden, um den Durchgangskanal 21 zu schließen, d. h. eine Einfassung der Behälterkette 9 zu bilden. Wie am deutlichsten aus Fig. 3 entnehmbar ist, weist der Motor 17 ein Ausgangsgetriebe 39 mit einer die Drehbewegung in eine hin- und hergehende Bewegung umsetzenden Exzentereinrichtung 41 auf, die über einstellbare Schubstangen 43 mit dem Tragrahmen 19 gekoppelt ist. Über diese Getriebeanordnung ist dem Tragrahmen 19 und damit der im Durchgangskanal 21 befindlichen Behälterkette 9 eine hin und her gehende Rüttelbewegung vermittelbar. Hierbei kann ein Hub im Bereich von 10 bis 20 mm Länge und beispielsweise ein Hin- und Hergang pro Sekunde vorgesehen sein. Auf jeden Fall wird durch Rüttelbewegungen im Austrittsbereich der Behälterkette 9 ein sicheres Ablösen der geformten Behälter 11 von den Formwänden sichergestellt, selbst wenn schwer entformbare Werkstoffe, insbesondere Polypropylenwerkstoffe, benutzt werden, bei denen hohe Verarbeitungstemperaturen vorliegen oder der zu entformende Werkstoff sehr steif ist. Somit sind die Vorteile nutzbar, die sich durch Einsatz von Polypropylenmaterial anstelle von Polyethylen oder einem koextrudierten Mehrlagenverbund ergeben. Diese Vorteile liegen insbesondere auch darin, dass man das Polypropylenmaterial bei höheren Temperaturen (121° C) autoklavieren kann und wobei das Polypropylenmaterial aus nur einem Extrusionskopf deutlich günstiger zu erhalten ist als die genannten Mehrlagensysteme.

Anstelle des gezeigten Linearantriebes 35 in Form eines Arbeitszylinders für die Lageeinstellung der Entformungseinrichtung 3 zwischen Arbeitsposition und Ruheposition können andersartige Antriebs- und Getriebemittel vorgesehen sein, beispielsweise Spindeltriebe und dergleichen. Auch können Arretiereinrichtungen vorhanden sein, die es ermöglichen, die Entformungseinrichtung 3 in der Arbeitsposition und/oder der Ruheposition oder in gewünschten Zwischenstellungen lösbar zu fixieren.

## Patentansprüche

1. Vorrichtung zum Herstellen blasgeformter Behältererzeugnisse (11) aus Kunststoffmaterial mittels entlang einer Herstellungslinie (5) verlaufender Einzel-Formteile (7), die paarweise aufeinander zu und voneinander weg bewegbar sind, um eine Herstellform zu schließen bzw. zu öffnen, in der die Behältererzeugnisse (11) geformt werden, die nach dem Entformvorgang in Form einer entlang der Herstellungslinie (5) bewegten Behälterkette (9) austreten, wobei eine Entformungseinrichtung (3), die außerhalb der Herstellform an der ausgetretenen Behälterkette (9) angreift, zur Unterstützung des Entformvorganges vorgesehen ist, **dadurch gekennzeichnet, dass** die Entformungseinrichtung (3) einen Kraftantrieb (17) aufweist, durch den die Behälterkette (9) aus der Herstellungslinie (5) in hin- und hergehender Bewegung (5) auslenkbar ist.

2. Vorrichtung nach Anspruch 1, **dadurch gekennzeichnet, dass** die Behälterkette (9) durch den Kraftantrieb (17) der Entformungseinrichtung (3) zumindest im Wesentlichen in der Richtung der Schließ- und Öffnungsbewegungen der Einzel-Formteile (7) auslenkbar ist.

3. Vorrichtung nach Anspruch 2, **dadurch gekennzeichnet, dass** die Entformungseinrichtung (3) eine mit dem Kraftantrieb (17) getrieblich gekuppelte Mitnehmeranordnung (15) mit Anlageflächen aufweist, an denen die sich entlang der Herstellungslinie (5) bewegende Behälterkette (9) geführt ist und über die Auslenkkräfte auf die Behälterkette (9) über tragbar sind.

4. Vorrichtung nach Anspruch 3, **dadurch gekennzeichnet, dass** die Mitnehmeranordnung (15) einen Durchgangskanal (21) aufweist, dessen Wandteile (19, 23, 25) eine Einfassung für die sich bewegende Behälterkette (9) sowie die Anlageflächen zur Übertragung der Auslenkkräfte auf die Behälterkette (9) bilden.

5. Vorrichtung nach Anspruch 4, **dadurch gekennzeichnet, dass** am Durchgangskanal (21) bewegbare Wandteile (23, 25) vorhanden sind, die in eine der geschlossenen Einfassung der Behälterkette (9) entsprechende Schließstellung und eine Offenstellung einstellbar sind, bei der die Mitnehmeranordnung (15) mit der Behälterkette (9) in und außer Eingriff bringbar ist.

6. Vorrichtung nach Anspruch 4 oder 5, **dadurch gekennzeichnet, dass** die Mitnehmeranordnung (15) einen mit dem als Kraftantrieb dienenden Motor (17) getrieblich verbundenen Tragrahmen (19) aufweist, der feststehende Wandteile des Durchgangskanales (21) bildet und an dem die das Öffnen und Schließen der Einfassung ermöglichenden bewegbaren Wandteile (23, 25) des Durchgangskanals (21) zwischen Offenstellung und Schließstellung schwenkbar gelagert sind.

7. Vorrichtung nach Anspruch 6, **dadurch gekennzeichnet, dass** der Tragrahmen (19) an zur Herstellungslinie (5) quer verlaufenden Führungsbahnen (27) verschiebbar geführt und mit dem Motor (17) über eine dessen Drehbewegung in eine hin- und hergehende Verschiebebewegung umsetzende Exzentereinrichtung (41) gekuppelt ist.

8. Vorrichtung nach Anspruch 6 oder 7, **dadurch gekennzeichnet, dass** zur Bildung eines Durchgangskanales (21)für eine breitflächige Behälterkette (9), in der eine Mehrzahl von einzelnen, Seite an Seite nebeneinanderliegenden Behältern (11)zu einer Behälterkettenbahn zusammengefaßt sind, die Länge des Tragrahmens (19) gleich oder größer ist als die Breite der Behälterkettenbahn und dass die beweglichen Wandteile (23, 25) an den seitlich der Behälterkettenbahn gelegenen Endbereichen des Tragrahmens (19) angelenkt sind.

9. Vorrichtung nach Anspruch 8, **dadurch gekennzeichnet, dass** die beweglichen Wandteile (23, 25) abgewinkelte Rahmenschenkel aufweisen, die am einen Ende jeweils einen die Gelenkstelle am Tragrahmen (19) bildenden kurzen Schenkel (25), dessen Länge die in Richtung der hin- und hergehenden Bewegung gemessene Weite des Durchgangskanales (21) definiert, und einen sich rechtwinklig anschließenden längeren Rahmenschenkel (23) aufweisen, der in der Schließstellung Anlageflächen an der zugewandten Breitseite der Behälterkette (9) bildet.

10. Vorrichtung nach einem der Ansprüche 1 bis 9, **dadurch gekennzeichnet, dass** die Entformungseinrichtung (3) an einem Vorrichtungsgestell (31) zwischen einer von der Herstellungslinie (5) entfernt gelegenen Ruheposition und einer den Entformvorgang an der Behälterkette (9) unterstützenden Arbeitsposition lageeinstellbar angebracht ist.

11. Vorrichtung nach einem der Ansprüche 7 bis 10, **dadurch gekennzeichnet, dass** die Führungsbahnen (27) und der Motor (17) an einem Geräteträger (29) gelagert sind, der am Vorrichtungsgestell (31) um eine Achse (33) schwenkbar gelagert ist, die zur Richtung der Herstellungslinie (5) senkrecht und zur Führungsebene der Führungsbahnen (27) parallel verläuft.

12. Vorrichtung nach Anspruch 11, **dadurch gekennzeichnet, dass** als Schwenkantrieb zum Überführen der Entformungseinrichtung (3) zwischen Ruheposition und Arbeitsposition ein Linearantrieb (35) vorgesehen ist, der jeweils gelenkig mit dem Geräteträger (29) in einem Abstand von dessen Schwenkachse (33) sowie mit einer Gelenkstelle (37) verbunden ist, die am Vorrichtungsgestell (31) in einem Abstand von der Schwenkachse (33) des Geräteträgers (29) gelegen ist.

## Claims

1. A device for producing blow moulded container products (11) from plastic material by means of individual mould parts (7) running along a production line (5) and which can be moved in pairs towards one another and away from one another in order to close and/or open a production mould in which the container products (11) are moulded and from which, following the demoulding procedure, the container products (11) emerge in the form of a container chain (9) that is moved along the production line (5), a demoulding unit (3) which acts on the emerging container chain (9) outside the production mould being provided in order to facilitate the demoulding procedure, **characterised in that** the demoulding unit (3) has a power drive (17) by means of which the container chain (9) can be deflected out of the production line (5) into a back and forth movement (5).

2. The device according to Claim 1, **characterised in that** the container chain (9) can be deflected at least essentially in the direction of the closing and opening movements of the individual mould parts (7) by means of the power drive (17) of the demoulding unit (3).

3. The device according to Claim 2, **characterised in that** the demoulding unit (3) has a driver arrangement (15) which is drive-coupled to the power drive (17) and has bearing surfaces on which the container chain moving along the production line (5) is guided, and by means of which deflection forces can be transferred to the container chain (9).

4. The device according to Claim 3, **characterised in that** the driver arrangement (15) has a passage channel (21) the wall sections (19, 23, 25) of which form a skirt for the moving container chain (9) as well as the bearing surfaces for transferring the deflection forces to the container chain (9).

5. The device according to Claim 4, **characterised in that** there are moveable wall sections (23, 25) on the passage channel (21) which can be moved into a closed position, corresponding to the closed skirt of the container chain (9), and into an open position in which the drive arrangement (15) can be engaged with and disengaged from the container chain (9).

6. The device according to Claim 4 or 5, **characterised in that** the driver arrangement (15) has a support frame (19) drive-connected to the motor (17) serving as the power drive, which forms the fixed wall sections of the passage channel (21) and on which are mounted, such as to be pivotable between the open position and the closed position, the moveable wall sections (23, 25) of the passage channel (21) which make it possible to open and close the skirt.

7. The device according to Claim 6, **characterised in that** the support frame (19) is displaceably guided on guide tracks (27) running transversely to the production line (5) and is coupled to the motor (17) by means of an eccentric device (41) which converts the rotational motion of said motor into a back and forth displacing motion.

8. The device according to Claim 6 or 7, **characterised in that** in order to from a passage channel (21) for a wide area container chain (9) in which a plurality of individual containers (11) lying next to one another side by side are combined to form a container chain train, the length of the support frame (19) is equal to or larger than the width of the container chain train and that the moveable wall sections (23, 25) are hinged to the end regions of the support frame (19) located laterally to the container chain train.

9. The device according to Claim 8, **characterised in that** the moveable wall sections (23, 25) have angled frame legs which have at one end respectively a short leg (25) forming the articulated point on the support frame (19), the length of which defines the width of the passage channel (21) measured in the direction of the back and forth movement and a longer frame leg (23) at right angles which in the closed position forms bearing surfaces on the facing wide side of the container chain (9).

10. The device according to any of Claims 1 to 9, **characterised in that** the demoulding unit (3) is mounted so as to be adjustable in position on a device frame (31) between a rest position located a distance away from the production line (5) and a working position facilitating the demoulding process on the container chain (9).

11. The device according to any of Claims 7 to 10, **characterised in that** the guide tracks (27) and the motor (17) are mounted on a device carrier (29) which is mounted on the device frame (31) so as to be pivotable about an axis (33) that runs perpendicular to the direction of the production line (5) and parallel to the guide plane of the guide tracks (27).

12. The device according to Claim 11, **characterised in that** in order to transfer the demoulding unit (3) between the rest position and the working position a linear drive (35) is provided as a pivot drive which is connected respectively in an articulated manner to the device carrier (29) a distance away from its pivot axis (33) as well as to an articulated point (37) which is located on the device frame (31) a distance away from the pivot axis (33) of the device carrier (29).

## Revendications

1. Dispositif de production de produits (11) formant récipient en matière plastique au moyen de parties (7) de moule individuelles se déplaçant le long d'une ligne (5) de production et venant par paire l'une sur l'autre et s'éloignant l'une de l'autre pour fermer ou pour ouvrir un moule de production, dans lequel les produits (11) formant récipient sont moulés, lesquels, après l'opération de démoulage, sortent sous la forme d'une chaîne (9) de récipients déplacée le long de la ligne (5) de production, un dispositif (3) de démoulage, qui attaque la chaîne (9) de récipients sortie à l'extérieur du moule de production, étant prévu pour faciliter l'opération de démoulage, **caractérisé en ce que** le dispositif (3) de démoulage a un entraînement (17) mécanique, par lequel la chaîne (9) de récipients peut être déviée suivant un mouvement (5) de va et vient hors de la ligne (5) de production.

2. Dispositif suivant la revendication 1, **caractérisé en ce que** la chaîne (9) de récipients peut être déviée par l'entraînement (17) mécanique du dispositif (3) de démoulage au moins sensiblement dans la direction des mouvements de fermeture et d'ouverture des parties (7) individuelles de moule.

3. Dispositif suivant la revendication 2, **caractérisé en ce que** le dispositif (3) de démoulage a un dispositif (15) d'entraîneur, qui est couplé en transmission avec l'entraînement (17) mécanique et qui a des surfaces de contact sur lesquelles la chaîne (9) de récipients se déplaçant le long de la ligne (5) de production est guidée et par lesquelles des forces de déviation peuvent être transmises à la chaîne (9) de récipients.

4. Dispositif suivant la revendication 3, **caractérisé en ce que** le dispositif (15) d'entraîneur a un canal (21) de passage, dont des parties (19, 23, 25) de paroi forment une bordure pour la chaîne (9) de produits en déplacement ainsi que les surfaces de contact pour la transmission des forces de déviation à la chaîne de récipients.

5. Dispositif suivant la revendication 4, **caractérisé en ce qu'**il y a sur le canal (21) de passage des parties (23, 25) de paroi mobiles, qui sont réglables dans une position de fermeture correspondant au bordage fermé de la chaîne (9) de récipients et dans une position d'ouverture dans laquelle le dispositif (15) d'entraîneur peut être mis en prise et hors de prise avec la chaîne (9) de récipients.

6. Dispositif suivant la revendication 4 ou 5, **caractérisé en ce que** le dispositif (15) d'entraîneur a un cadre (19) de support, qui est relié en transmission au moteur (17) servant d'entraînement mécanique, qui forme des parties de paroi fixes du canal (21) de passage et sur lequel les parties (23, 25) de paroi mobiles du canal (21) de passage permettant l'ouverture et la fermeture de la bordure sont montées pivotantes entre une position d'ouverture et une position de fermeture.

7. Dispositif suivant la revendication 6, **caractérisé en ce que** le cadre (19) de support est monté coulissant sur des voies, (27) de guidage s'étendant transversalement à la ligne (5) de production et est couplé au moteur (17) par un dispositif (41) à excentrique transformant sont mouvement de rotation en un mouvement de coulissement en va et vient.

8. Dispositif suivant la revendication 6 ou 7, **caractérisé en ce que**, pour former un canal (21) de passage pour une chaîne (9) de récipients de surface large, dans laquelle une multiplicité de récipients (11-) individuels sont disposés côte à côte les uns à côté des autres en une voie de chaîne de récipients, la longueur du cadre (19) de support est supérieure ou égale à la largeur de la voie de chaîne de récipients et **en ce que** les parties (23, 25) mobiles de paroi sont articulées aux zones d'extrémité du cadre (19) de support, qui sont disposées latéralement à la voie de la chaîne de récipients.

9. Dispositif suivant la revendication 8, **caractérisé en ce que** les parties (23, 25) mobiles de paroi ont des branches de cadre coudées, qui ont à une extrémité respectivement une branche (25) courte qui forme le point d'articulation au cadre (19) de support et dont la longueur définit la largeur du canal (21) de passage mesurée dans la direction du mouvement de va et vient, et une branche (23) de cadre plus longue, se raccordant à angle droit et formant dans la position de fermeture des surfaces de contact avec le côté large tourné vers elles de la chaîne (9) de récipients.

10. Dispositif suivant l'une des revendications 1 à 9, **caractérisé en ce que** le dispositif (3) de démoulage est mis d'une manière réglable en position sur un bâti (31) de dispositif entre une position de repos éloigné de la ligne (5) de production et une position de travail facilitant l'opération de démoulage sur la chaîne (9) de récipients.

11. Dispositif suivant l'une des revendications 7 à 10, **caractérisé en ce que** les voies (27) de guidage et le moteur (17) sont montées sur un support (29) d'appareil qui est monté pivotant sur la bâti (31) de dispositif autour d'un axe (33) qui est perpendiculaire à la direction de la ligne (5) de production et qui est parallèle au plan de guidage des voies (27) de guidage.

12. Dispositif suivant la revendication 11, **caractérisé en ce qu'**il est prévu comme entraînement en pivotement, pour faire passer le dispositif (3) de démoulage entre une position de repos et une position de travail, un entraînement (35) linéaire qui articulé respectivement au support (29) d'appareil à distance de son axe (33) de pivotement, ainsi qu'à un point (37) d'articulation qui se trouve sur le bâti (31) de dispositif à distance de l'axe (33) de pivotement du support (29) d'appareil.
